# FASCICULE DE BREVET EUROPEEN

(11) **EP 1 828 584 B1**
(45) Date de publication et mention de la délivrance du brevet: **05.05.2010**
(21) Numéro de dépôt: 05824421.1
(22) Date de dépôt: 06.12.2005
(51) Int. Cl.: F02D 41/20

(54) **DISPOSITIF DE COMMANDE ELECTRONIQUE POUR ACTIONNEURS PIEZO-ELECTRIQUES ULTRASONORES**
VORRICHTUNG ZUR ELEKTRONISCHEN STEUERUNG VON PIEZOELEKTRISCHEN ULTRASCHALLAKTUATOREN
DEVICE FOR ELECTRONIC CONTROL OF ULTRASONIC PIEZOELECTRIC ACTUATORS

(30) Priorité: 14.12.2004 FR 0413279
(43) Date de publication de la demande: 05.09.2007
(73) Titulaire: RENAULT S.A.S., 92100 Boulogne Billancourt (FR)
(72) Inventeur: L VIN, Laurent, F-75015 Paris (FR); RIPOLL, Christophe, F-78220 Viroflay (FR)
(86) Numéro de dépôt international: PCT/FR2005/051043
(87) Numéro de publication internationale: WO 2006/064147

(56) Documents cités:
- EP-A- 1 422 764
- DE-A1- 3 939 547
- US-A1- 2001 020 804

## Description

La présente invention concerne un dispositif de commande électronique de plusieurs actionneurs piézo-électriques ultrasonores, et plus particulièrement d'injecteurs de carburant à étage piézo-électrique, pilotés par le calculateur d'injection électronique d'un moteur à combustion interne dans un véhicule automobile.

Plus précisément, le problème que vise à résoudre l'invention est le pilotage d'un dispositif de commande électronique provoquant l'excitation des cellules piézo-électriques pour faire vibrer la structure d'un injecteur, un tel dispositif étant décrit dans la demande de brevet français, déposée sous le numéro 01 14023 au nom de la Demanderesse. Un injecteur de carburant à étage piézo-électrique ultrasonore est destiné à pulvériser très finement le carburant, avec des gouttelettes calibrées pour assurer un dosage précis et suffisamment petites pour assurer la vaporisation complète et homogène du carburant injecté. Un tel injecteur comporte entre autres une buse cylindrique alimentée en carburant et à l'extrémité de laquelle est ménagé un orifice d'injection, et des moyens de mise en vibration cyclique de la buse, tel qu'un transducteur, comportant un étage en céramique piézo-électrique aux bornes de laquelle on fait varier la tension électrique pour modifier son épaisseur entre deux positions extrêmes correspondant à l'ouverture et à la fermeture de l'injecteur, à un rapport de démultiplication près. Une céramique piézo-électrique d'injecteur est équivalente, au premier ordre, à une capacité dont la tension de chargement est élevée, supérieure à une centaine de volts. Ce transducteur est piloté en durée et en intensité par un dispositif de commande électronique, lui-même piloté par le système électronique de contrôle moteur pour réaliser une ouverture oscillante à fréquence ultrasonore du nez de la buse.

Le dispositif de commande électronique est destiné à générer un signal alternatif haute tension, supérieure à une centaine de volts, de fréquence élevée, supérieure à une dizaine de kiloHertz, pour exciter les cellules piézo-électriques à partir d'une source de tension continue. Dans un véhicule automobile, la batterie fournit une tension d'alimentation de valeur 12, 24 ou 42 volts, ce qui implique d'augmenter cette tension par exemple par un convertisseur-élévateur de tension continue DC-DC alimenté par la basse tension de la batterie.

Différentes technologies de céramiques piézo-électriques peuvent être utilisées en particulier avec des tensions d'excitation à excursion dissymétrique, variant de -200 à + 400 volts par exemple.

Il existe actuellement des dispositifs de commande des actionneurs piézo-électriques les pilotant par une haute tension positive, et n'exploitant donc pas leur possibilité d'excitation par de hautes tensions négatives.

Le but de l'invention est de proposer une commande électronique d'un actionneur piézo-électrique dans toute sa plage d'excursion même si elle est dissymétrique allant d'une haute tension négative à une haute tension positive.

Pour cela, un premier objet de l'invention est un dispositif de commande électronique d'au moins un actionneur piézo-électrique ultrasonore, piloté électroniquement par un calculateur de contrôle et alimenté par une source de tension continue, comportant un étage d'amplification de ladite tension continue délivrant un signal de haute tension alternatif, à haute fréquence d'excitation de l'actionneur, à un étage de génération d'un courant de charge de l'actionneur, caractérisé en ce que ledit étage de génération d'un courant de charge est constitué d'une inductance de charge reliée à un interrupteur de découpage pilotable, avec une diode de roue libre montée en anti-parallèle, par l'intermédiaire d'une capacité chargée à une haute tension négative montée en série avec une diode dans le sens opposé au courant de charge de l'inductance et associée à une diode maintenant constante la haute tension négative aux bornes de la capacité.

Un second objet de l'invention est un procédé de mise en oeuvre dudit dispositif de commande d'au moins un actionneur piézo-électrique ultrasonore, caractérisé en ce que, pour obtenir une tension alternative variant entre une valeur minimale négative et une valeur maximale positive aux bornes d'un actionneur piézo-électrique, le calculateur de contrôle réalise les étapes suivantes :
- A) sélection d'un actionneur piézo-électrique par fermeture d'un interrupteur de sélection en série avec ledit actionneur ;
- B) charge par une tension négative de la capacité de l'étage de génération d'un courant de charge, lors de la phase initiale du pilotage des actionneurs ;
- C) fermeture de l'interrupteur de découpage de l'étage de génération d'un courant de charge quand celui-ci est négatif ou nul et que la tension d'excitation des actionneurs est négative ;
- D) ouverture dudit interrupteur de découpage de l'étage de génération d'un courant de charge quand celui-ci est maximum et que la tension d'excitation des actionneurs est nulle.

D'autres caractéristiques et avantages de l'invention apparaîtront au cours de la description illustrée par les figures suivantes qui sont :
- la figure 1 : un schéma d'un dispositif de commande d'actionneurs piézo-électriques selon l'invention ;
- la figure 2 : le signal de commande de l'interrupteur de découpage ;
- la figure 3 : les variations temporelles du courant dans la branche de découpage ;
- la figure 4 : les variations temporelles du courant de charge d'un actionneur selon l'invention ;
- la figure 5 : les variations temporelles de la tension d'excitation aux bornes d'un actionneur selon l'invention.

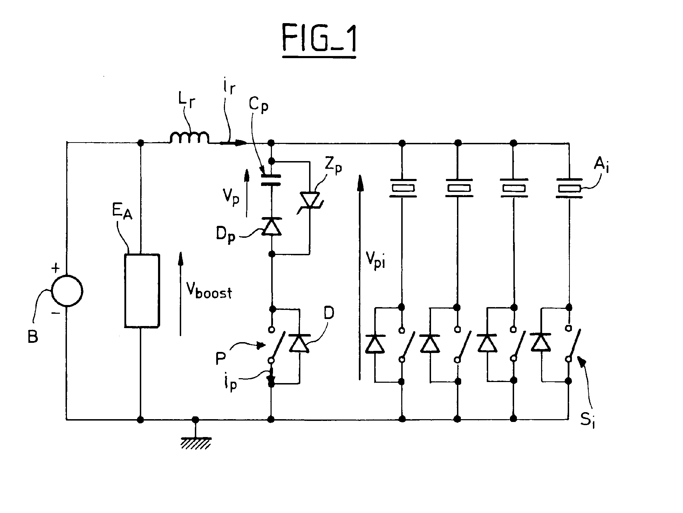

Comme le montre le schéma électronique de la figure 1, un dispositif de commande de plusieurs actionneurs piézo-électriques Aᵢ, pouvant être choisis alternativement grâce à des interrupteurs de sélections Sᵢ placés en série avec chacun des actionneurs, comprend un premier étage E_{A}, alimenté par une source de tension continue B, destiné à l'amplification de cette tension généralement produite par la batterie du véhicule. Ce premier étage de convertisseur-élévation de la tension B en une haute tension V_{boost} de plusieurs centaines de volts, alimente à son tour un deuxième étage destiné à générer un courant d'excitation des actionneurs piézo-électriques.

Ce deuxième étage d'un courant de charge iᵣ des actionneurs Aᵢ est constitué d'une inductance de charge Lᵣ, dont une borne est reliée à l'étage d'amplification de la tension et dont l'autre borne est reliée à une branche, montée en parallèle de chacun des actionneurs Aᵢ et de son interrupteur de sélection Sᵢ . Cette branche est constituée d'un interrupteur de découpage P, pilotable électroniquement, avec une diode D de roue libre montée en anti-parallèle, reliés à l'inductance Lᵣ par l'intermédiaire d'une capacité Cₚ, chargée à une haute tension négative Vₚ , montée en série avec une diode Dₚ dans le sens opposé au courant de charge iᵣ de l'inductance Lᵣ. Durant la phase initiale de commande des injecteurs piézo-électriques, en pilotant la fermeture de l'interrupteur de sélection d'un des injecteurs, la capacité Cₚ est chargée par une tension négative grâce au courant circulant dans les diodes D et Dₚ alors que l'interrupteur P est ouvert. Une diode Zéner Zₚ est associée en parallèle à la capacité Cₚ en série avec la diode Dₚ, pour écrêter la haute tension négative Vₚ aux bornes de la capacité dès qu'elle devient égale à la valeur de tenue en tension de la diode Zéner.

La capacité Cₚ est dimensionnée pour que la tension négative Vₚ à ses bornes, de l'ordre de -150 volts, soit atteinte en 5 impulsions de commande d'un injecteur piézo-électrique par exemple et sa valeur peut être égale à 10 nF.

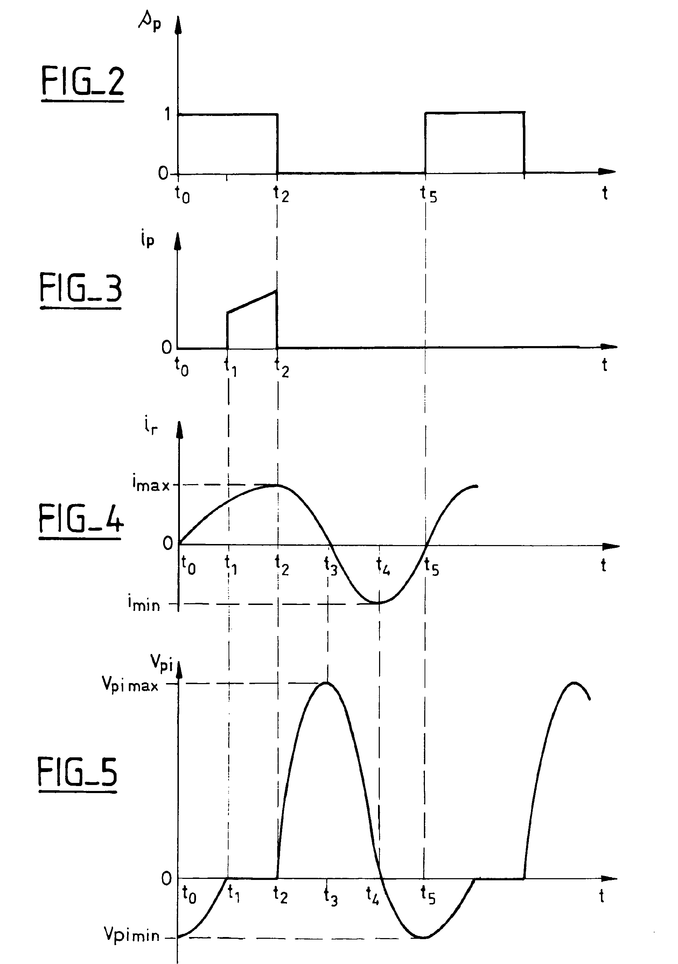

Le fonctionnement du dispositif de commande est le suivant, comme le montrent les formes d'ondes représentées sur les figures 2 à 5 :
- à l'instant t₀, la capacité Cₚ présente une haute tension Vₚ négative à ses bornes, de l'ordre de - 350 volts par exemple, de sorte que la tension Vₚᵢ d'excitation est aussi égale à Vₚ. Le courant iᵣ de charge de l'inductance Lᵣ est négatif ou nul et il n'u a pas de courant i_{P} circulant dans l'interrupteur P de découpage de la branche. A cet instant tₒ, l'interrupteur de découpage P est commandé à la fermeture par un signal Cₚ qui passe à 1 ;
- jusqu'à l'instant t₁, le courant iᵣ de charge dans l'inductance Lᵣ croît, la tension Vₚᵢ d'excitation des actionneurs piézo-électriques tend vers zéro, décroissant en valeur absolue tout en restant négative, pendant que le courant i_{P} reste nul car le courant de charge iᵣ passe par la capacité interne de l'actionneur piézo-électrique en raison de sa charge ;
- à l'instant t₁, le courant i_{P} dans l'interrupteur de découpage P croît brutalement, le courant iᵣ de charge continue à augmenter, mais la tension Vₚᵢ aux bornes des actionneurs reste nulle car le courant de charge iᵣ passe par la diode Zéner Zₚ et l'interrupteur de découpage P qui est fermé, ce qui constitue une branche en court-circuit aux bornes des actionneurs ;
- à l'instant t₂, l'interrupteur de découpage P est commandé à l'ouverture, la tension Vₚᵢ d'excitation croît à partir de 0 alors que le courant iᵣ de charge a atteint sa valeur maximale iᵣₘₐₓ et que le courant i_{P} s'annule. Puis la tension d'excitation Vₚᵢ croît jusqu'à une valeur maximale Vₚᵢₘₐₓ élevée, voisine de 1000 volts par exemple, et le courant iᵣ décroît jusqu'à zéro à l'instant t₃ ;
- de l'instant t₃ à l'instant t₄, la tension d'excitation Vₚᵢ décroît de sa valeur maximale Vₚᵢₘₐₓ jusqu'à zéro pendant que le courant iᵣ devient négatif et décroît jusqu'à sa valeur minimale iᵣₘᵢₙ ;
- de l'instant t₄ à l'instant t₅, le courant de charge iᵣ est toujours négatif, mais croît de son minimum iᵣₘᵢₙ jusqu'à zéro pendant que la tension d'excitation Vₚᵢ décroît de zéro jusqu'à sa valeur minimale Vₚᵢₘᵢₙ égale à la tension négative Vₚ aux bornes de la capacité Cₚ. Puis le procédé reprend à l'instant t₅ identique à celui de l'instant t₀.

Pour cela, le procédé de mise en oeuvre d'un dispositif de commande d'au moins un actionneur piézo-électrique ultrasonore selon l'invention, comporte les étapes suivantes que réalise le calculateur de contrôle pour obtenir une tension alternative variant entre une valeur minimale négative et une valeur maximale positive aux bornes d'un actionneur piézo-électrique :
-A) sélection d'un actionneur piézo-électrique Aᵢ par fermeture d'un interrupteur Sᵢ en série avec ledit actionneur ;
-B) charge par une tension négative Vₚ de la capacité Cₚ de l'étage de génération d'un courant de charge lors de la phase initiale du pilotage des actionneurs ;
-C) fermeture de l'interrupteur de découpage P de l'étage de génération d'un courant de charge quand ledit courant de charge iᵣ est négatif ou nul et que la tension d'excitation Vₚᵢ des actionneurs est négative ;
-D) ouverture dudit interrupteur de découpage P quand le courant de charge iᵣ est maximum iₘₐₓ et que la tension d'excitation Vₚᵢ des actionneurs est nulle.

Ainsi, on constate que la tension négative Vₚ, aux bornes de la capacité Cₚ de l'étage de génération d'un courant de charge des actionneurs, permet d'obtenir une tension d'excitation Vₚᵢ desdits actionneurs qui a une excursion dissymétrique d'un minimum négatif à un maximum positif.

La diode Zéner Zₚ est destinée à maintenir constante la tension Vₚ aux bornes de la capacité Cₚ d'une part et à charger l'inductance Lᵣ quand l'interrupteur P est fermé puisque le courant de charge iᵣ doit passer par la diode Zₚ pour aller dans l'interrupteur P.

## Revendications

1. Dispositif de commande électronique d'au moins un actionneur piézo-électrique ultrasonore, le dispositif de commande électronique étant piloté électroniquement par un calculateur de contrôle, le dispositif de commande électronique étant alimenté par une source de tension continue, le dispositif de commande électronique comportant un étage d'amplification de la tension continue qui délivre un signal à un étage de génération d'un courant de charge, le signal délivré à l'étage de génération d'un courant de charge présentant une haute tension alternative et une haute fréquence d'excitation de l'actionneur,
le dispositif de commande électronique étant **caractérisé en ce que** l'étage de génération d'un courant de charge (iᵣ) est constitué de :
- une inductance (Lᵣ) comportant une première borne reliée à l'étage d'amplification de la tension et une deuxième borne ;
- une branche d'excitation reliée à la deuxième borne de l'inductance, la branche d'excitation étant constituée de :
- une capacitance (Cₚ) chargée à une haute tension négative (Vₚ) ,
- une diode (Dₚ) dans le sens opposé au courant de charge (iᵣ) de l'actionneur (Aᵢ)⁻,
- un interrupteur de découpage (P) pilotable qui est monté en série avec la diode (Dₚ) et la capacitance (Cₚ),
- une diode (D) de roue libre montée en anti-parallèle par rapport à l'interrupteur de découpage (P), et
- une diode Zéner (Zₚ) montée en parallèle par rapport à la capacitance (Cₚ) et à la diode (Dₚ), la diode Zéner (Zₚ) maintenant constante la haute tension négative (Vₚ) aux bornes de la capacitance (Cₚ).

2. Procédé de mise en oeuvre d'un dispositif de commande d'au moins un actionneur pièzo-électrique ultrasonore selon la revendication 1, **caractérisé en ce que**, pour obtenir une tension alternative variant entre une valeur minimale négative (Vₚᵢₘᵢₙ) et une valeur maximale positive (Vₚᵢₘₐₓ) aux bornes d'un actionneur piézo-électique (Aᵢ), le calculateur de contrôle réalise les étapes suivantes :
A) Sélection d'un actionneur piézo-électrique (Aᵢ) par fermeture d'un interrupteur (Sᵢ) en série avec ledit actionneur ;
B) charge par une tension négative (Vₚ) de la capacité (Cₚ) de l'étage de génération d'un courant de charge lors de la phase initiale du pilotage des actionneurs ;
C) fermeture de l'interrupteur de découpage (P) de l'étage de génération d'un courant de charge quand ledit courant de charge (iᵣ) est négatif ou nul et que la tension d'excitation (Vₚᵢ) des actionneurs est négative ;
D) ouverture de l'interrupteur de découpage (P) de l'étage de génération d'un courant de charge quand ledit courant de charge (iᵣ) est maximum (iₘₐₓ) et que la tension d'excitation (Vₚᵢ) des actionneurs est nulle.

## Claims

1. Electronic driver device for at least one ultrasonic piezoelectric actuator, the electronic driver device being controlled electronically by a control processor, the electronic driver device being supplied by a direct-current voltage source, the electronic driver device comprising an amplification stage for the direct-current voltage which delivers a signal to a stage for generating a charge current, the signal delivered to the stage for generating a charge current having a high alternating-current voltage and a high actuator excitation frequency, the electronic driver device being **characterized in that** the stage for generating a charge current (iᵣ) consists of :
- an inductor (Lᵣ) comprising a first terminal connected to the voltage amplification stage and a second terminal;
- an excitation branch connected to the second terminal of the inductor, the excitation branch consisting of:
- a capacitor (Cₚ) charged up to a high negative voltage (Vₚ) ,
- a diode (Dₚ) reverse-biased with respect to the charge current (iᵣ) of the actuator (Aᵢ),
- a controllable chopping switch (P) which is mounted in series with the diode (Dₚ) and the capacitor (Cₚ),
- a free-wheel diode (D) mounted in anti-parallel configuration with respect to the chopping switch (P), and
- a Zener diode (Zₚ) mounted in parallel with respect to the capacitor (Cₚ) and to the diode (Dₚ), the Zener diode (Zₚ) keeping the negative high voltage (Vₚ) at the terminals of the capacitor (Cₚ) constant.

2. Method for the implementation of a driver device for at least one ultrasonic piezoelectric actuator according to Claim 1, **characterized in that**, in order to obtain an alternating voltage varying between a negative minimum value (Vₚₘᵢₙ) and a positive maximum value (Vₚₘₐₓ) across the terminals of a piezoelectric actuator (Aᵢ), the control processor carries out the following steps:
A) selection of a piezoelectric actuator (Aᵢ) by closing a switch (Sᵢ) in series with said actuator;
B) charging with a negative voltage (Vₚ) from the capacitor (Cₚ) of the charge current generation stage during the initial phase for the control of the actuators;
C) closing of the chopping switch (P) of the charge current generation stage when said charge current (iᵣ) is negative or zero and when the excitation voltage (Vₚ) of the actuators is negative;
D) opening of the chopping switch (P) of the charge current generation stage when said charge current (iᵣ) is maximum (iₘₐₓ) and when the excitation voltage (Vₚᵢ) of the actuators is zero.

## Patentansprüche

1. Elektronische Steuervorrichtung mindestens eines piezoelektrischen Ultraschall-Aktors, wobei die elektronische Steuervorrichtung elektronisch von einem Kontrollrechner gesteuert wird, wobei die elektronische Steuervorrichtung von einer Gleichspannungsquelle gespeist wird, wobei die elektronische Steuervorrichtung eine Verstärkerstufe der Gleichspannung aufweist, die ein Signal an eine Erzeugerstufe eines Ladestroms liefert, wobei das an die Erzeugerstufe eines Ladestroms gelieferte Signal eine hohe Wechselspannung und eine hohe Anregungsfrequenz des Aktors aufweist,
wobei die elektronische Steuervorrichtung **dadurch gekennzeichnet ist, dass** die Erzeugerstufe eines Ladestroms (iᵣ) besteht aus:
- einer Drosselspule (Lᵣ), die eine erste Klemme, die mit der Verstärkerstufe der Spannung verbunden ist, und eine zweite Klemme aufweist;
- einen Anregungszweig, der mit der zweiten Klemme der Drosselspule verbunden ist, wobei der Anregungszweig besteht aus:
- einem Kondensator (Cₚ), der auf eine hohe negative Spannung (Vₚ) geladen ist,
- einer Diode (Dₚ) in Gegenrichtung zum Ladestrom (iᵣ) des Aktors (Aᵢ),
- einem steuerbaren Taktschalter (P), der mit der Diode (Dₚ) und dem Kondensator (Cₚ) in Reihe geschaltet ist,
- einer Freilaufdiode (D), die bezüglich des Taktschalters (P) antiparallel geschaltet ist, und
- einer Zener-Diode (Zₚ), die bezüglich des Kondensators (Cₚ) und der Diode (Dₚ) parallel geschaltet ist, wobei die Zener-Diode (Zₚ) die hohe negative Spannung (Vₚ) an den Klemmen des Kondensators (Cₚ) konstant hält.

2. Verfahren zur Anwendung einer Steuervorrichtung mindestens eines piezoelektrischen Ultraschall-Aktors nach Anspruch 1, **dadurch gekennzeichnet, dass**, um eine Wechselspannung zu erhalten, die zwischen einem minimalen negativen Wert (Vₚᵢₘᵢₙ) und einem maximalen positiven Wert (Vₚᵢₘₐₓ) an den Klemmen eines piezoelektrischen Aktors (Aᵢ) variiert, der Kontrollrechner die folgenden Schritte durchführt:
A) Wahl eines piezoelektrischen Aktors (Aᵢ) durch Schließen eines Schalters (Sᵢ) in Reihe mit dem Aktor;
B) Laden des Kondensators (Cₚ) der Erzeugerstufe eines Ladestroms mit einer negativen Spannung (Vₚ) während der Anfangsphase der Steuerung der Aktoren;
C) Schließen des Taktschalters (P) der Erzeugerstufe eines Ladestroms, wenn der Ladestrom (iᵣ) negativ oder null und die Anregungsspannung (Vₚᵢ) der Aktoren negativ ist;
D) Öffnen des Taktschalters (P) der Erzeugerstufe eines Ladestroms, wenn der Ladestrom (iᵣ) maximal (iₘₐₓ) und die Anregungsspannung (Vₚᵢ) der Aktoren null ist.
